# EUROPEAN PATENT APPLICATION

(11) **EP 4 787 748 A1**
(43) Date of publication of application: **05.08.2026**
(21) Application number: 25226772.9
(22) Date of filing: 23.12.2025
(51) Int. Cl.: H04L 1/00, H04L 27/34

(54) **ADAPTIVE SIGNALING METHOD, COMMUNICATION SYSTEM, AND TEST AND/OR MEASUREMENT SYSTEM**

(30) Priority: 28.01.2025 US 202519039186
(71) Applicant: Rohde & Schwarz GmbH & Co. KG, 81671 München (DE)
(72) Inventor: Rossetto, Francesco, 81671 München (DE); Oeldemann, Andreas, 81671 München (DE); Roessler, Andreas, Columbia, 21046 (US)
(74) Representative: Prinz & Partner mbB

(57) **Abstract**

An adaptive signaling method of signaling between a first node (12) and a second node (14) is described. The adaptive signaling method comprises the steps of
- generating, by the first node (12), a transmission signal to be transmitted to the second node (14), wherein the transmission signal comprises information on a custom modulation scheme to be used for communication between the first node (12) and the second node (14), wherein the custom modulation scheme comprises a custom set of constellation points; and
- adapting, by the second node (14), a modulation scheme and/or a demodulation scheme used by the second node (14) for subsequent communication with the first node (12) based on the information on the custom modulation scheme comprised in the transmission signal.

Further, a communication system, as well as a test and/or measurement system are described.

## Description

The present invention generally relates to an adaptive signaling method of signaling between a first node and a second node. The present invention further relates to a communication system, as well as to a test and/or measurement system.

Standard modulation schemes such as QPSK, 4-QAM, 16-QAM or 256-QAM are used in a plurality of common communication systems, for example in communication systems according to the 4G or 5G standard.

Therein, nodes of the communication system are usually able to use different standard modulation schemes for signaling other nodes, wherein the standard modulation schemes that are usable by the nodes are typically fixed and defined in the corresponding communication standard.

However, the standard modulation schemes may not provide optimal results under all circumstances, for example if disturbances are present in a transmission path between the nodes.

Thus, for the object of the present invention is to provide an adaptive signaling method, a communication system, and a test and/or measurement system that increase the reliability of a wireless communication connection between nodes.

According to the present invention, the problem is solved by an adaptive signaling method of signaling between a first node and a second node. The adaptive signaling method comprises the steps of
- generating, by the first node, a transmission signal to be transmitted to the second node, wherein the transmission signal comprises information on a custom modulation scheme to be used for communication between the first node and the second node, wherein the custom modulation scheme comprises a custom set of constellation points;
- transmitting, by the first node, the transmission signal to the second node;
- receiving, by the second node, the transmission signal; and
- adapting, by the second node, a modulation scheme used by the second node for subsequent communication with the first node based on the information on the custom modulation scheme comprised in the transmission signal.

Therein and hereinafter, the term "node" is understood to denote an electronic device or a functional assembly of electronic devices that is configured to transmit and/or receive wireless radio frequency, RF, signals.

For example, a node may be or comprise a base station. As another example, a node may be or comprise user equipment such as a smartphone, a tablet, a handheld radio, or any other type of user device being configured for wireless communication.

In fact, the node(s) may be compatible with certain mobile communication standards, such as the 4G standard, the 5G standard, and/or a WLAN standard.

In general, the first node is a transmitter node or a transceiver node.

For example, the first node may be or comprise a base station.

The second node is a receiver node or a transceiver node.

For example, the second node may be or comprise a user equipment (UE) device.

The term "information on a custom modulation scheme" is understood to denote instructions that are sufficient for the second node to derive the modulation scheme to be used by the second node for subsequent communication with the first node. Several examples of how this information is included in the transmission signal are given below.

The adaptive signaling method according to the present invention is based on the idea to use a custom modulation scheme instead of a standard modulation scheme in order to optimize the signal quality of signals exchanged between the first node and the second node, such that the reliability of a wireless connection between the first node and the second node is improved.

In fact, a symbol error rate of data exchanged between the first node and the second node may be minimized.

Therein, the first node chooses the custom modulation scheme to be used and instructs, by means of the transmission signal, the second node to adapt the modulation scheme used to the custom modulation scheme.

More precisely, the first node instructs the second node by means of the information on the custom modulation scheme comprised in the transmission signal.

By adapting the modulation scheme used by the first node and the second node from a standard modulation scheme to the custom modulation scheme, optimal signal quality is ensured for the communication between the nodes even if disturbances are present.

As will be described below, the first node may be or comprise a test and/or measurement instrument, and the first node may instruct the second node to adapt the modulation scheme for testing purposes, i.e. for performing tests on the second node.

According to an aspect of the present invention, at least one of the constellation points of the custom set of constellation points is offset to junction points of a rectangular grid in the IQ plane. In other words, the custom modulation scheme is different from standard-compliant schemes such as quadrature phase-shift keying (QPSK) or other standard-compliant quadrature amplitude modulation (QAM) schemes such as 4-QAM, 16-QAM, 64-QAM or 256-QAM. In these standard-compliant schemes, the constellation points are all located on the junctions of the rectangular grid in the IQ plane.

By having at least one of the constellation points being offset to the junctions of the rectangular grid, disturbances can be alleviated, such that the reliability of the wireless connection between the first node and the second node is improved.

In an exemplary embodiment of the present invention, the custom set of constellation points is chosen by the first node to optimize a predefined metric. In general, the predefined metric relates to a transmission quality between the first node and the second node. Accordingly, by optimizing the predefined metric, the transmission quality between the first node and the second node is optimized, thereby improving the reliability of the wireless connection between the first node and the second node.

In fact, a symbol error rate of data transmitted between the first node and the second node may be minimized.

According to another aspect of the present invention, the predefined metric relates to alleviating at least one impairment in a signal chain including the first node, the second node, and a transmission path between the first node and the second node. Accordingly, the at least one impairment may be addressed by the first node by choosing a custom modulation scheme that is least sensitive to the particular at least one impairment present.

A further aspect of the present invention provides that the at least one impairment comprises at least one of a hardware impairment of the first node, a software impairment of the first node, a hardware impairment of the second node, a software impairment of the second node, a fading, a change in polarization, a change in temperature, and/or Doppler effect induced disturbances. However, it is to be understood that any other type of impairment may be alleviated by choosing an appropriate custom modulation scheme.

Therein, the term "hardware impairment" may relate to an impairment of digital hardware and/or to an impairment of analog hardware.

In a further exemplary embodiment of the present invention, the first node comprises a machine-learning circuit, wherein the machine-learning circuit comprises a machine-learning model, wherein the machine-learning model is pre-trained to select the custom set of constellation points corresponding to the custom modulation scheme to be used for communication between the first node and the second node. Thus, the custom modulation scheme to be used for communication between the first node and the second node is automatically selected by the pre-trained machine-learning model incorporated in the first node.

The first node may generate the custom set of constellation points. In other words, rather than choosing from a predefined number of sets of custom constellation points, the first node may purposefully generate the custom set of constellation points to optimize the transmission between the first node and the second node.

In fact, the first node may generate a custom mapping between symbols and the custom constellation points. In other words, the first node decides which symbols of a symbol sequence are mapped to which constellation points of the custom set of constellation points according to the custom modulation scheme.

If the symbol sequence is a bit sequence, the first node decides which bits of the bit sequence are mapped to which constellation points of the custom set of constellation points according to the custom modulation scheme.

According to an aspect of the present invention, the information on the custom modulation scheme is included in a media access control, MAC, control element, CE, of the transmission signal and/or in downlink control information, DCI, of the transmission signal. Accordingly, the MAC CE and/or the DCI may, compared to the MAC CE and/or the DCI according to a standard modulation scheme, be adapted to comprise the information on the custom modulation scheme.

It is noted that both approaches, i.e. including the information on the custom modulation scheme in the MAC CE or the DCI, can also be combined.

In an exemplary embodiment of the present invention, the transmission signal comprises a constellation point portion, wherein the constellation point portion comprises locations of the individual constellation points in the IQ plane. Accordingly, the transmission signal comprises all information necessary for locating the individual constellation points in the IQ plane. Accordingly, the second node does not need to have any a priori information on the location of the constellation points used in the custom modulation scheme, as the corresponding information is transmitted to the second node via the transmission signal, or more precisely via the constellation point portion of the transmission signal.

In a further exemplary embodiment of the present invention, the transmission signal comprises a modulation identification portion, wherein the modulation identification portion comprises information on the number of constellation points comprised in the custom set of constellation points. Accordingly, the information on how many constellation points are to be used for the custom modulation scheme is transmitted to the second node via the transmission signal, or more precisely via the modulation identification portion of the transmission signal.

For example, the modulation identification portion may comprise a numerical value n indicating that 4ⁿ⁺¹ constellation points are comprised in the custom set of constellation points.

An aspect of the present invention provides that the transmission signal comprises an activation portion, wherein the activation portion comprises at least one bit indicating whether the custom set of constellation points is to be used for communication between the first node and the second node. Accordingly, the second node can be instructed to activate or deactivate the custom modulation scheme via the transmission signal, or more precisely via the activation portion of the transmission signal.

For example, the activation portion may comprise a single symbol, particularly a single bit. A first value of the symbol, for example 0, may indicate that the custom modulation scheme is to be deactivated, and a second value of the symbol, for example 1, may indicate that the custom modulation scheme is to be activated.

If the custom modulation scheme is deactivated, the second node may employ a standard modulation scheme, such as QPSK, 4-QAM, 16-QAM, 64-QAM, or 256-QAM.

According to another aspect of the present invention, the transmission signal comprises a precision portion, wherein the precision portion comprises information on a precision to be used for encoding the constellation points. In fact, the precision portion defines the accuracy with which the locations of the custom constellation points are to be determined or rather encoded.

For example, the precision portion may indicate the number of symbols or rather to the number of bits with which the locations of the custom constellation points is to be encoded.

In a particular example, the precision portion may indicate that the locations of the custom constellation points is to be encoded by one byte per IQ component or by two bytes per IQ component.

In an exemplary embodiment of the present invention, the custom set of constellation points is unknown to the second node prior to receiving the transmission signal. Accordingly, all information necessary for the second node to adapt the modulation scheme used to the custom modulation scheme may be provided by means of the transmission signal.

According to another aspect of the present invention, at least one custom set of constellation points is saved in a memory of the second node. Accordingly, the transmission signal only needs to specify the custom modulation scheme to be used instead of transmitting the complete information on the custom set of constellation points, as the second node already has a priori knowledge about possible custom sets of constellation points. Thus, the amount of information that needs to be transmitted via the transmission signal is reduced, thereby reducing the size of the transmission signal.

In fact, the transmission signal may comprise an identification portion, wherein the identification portion indicates the set of constellation points to be used by the second node. In other words, the second node is instructed to choose a certain modulation scheme via the identification portion, namely a standard modulation scheme or a custom modulation scheme.

According to an aspect of the present invention, the first node comprises a test and/or measurement instrument. Accordingly, the test and/or measurement instrument may instruct the second node to adapt the modulation scheme used by the second node in order to perform tests and/or measurements on the second node.

For example, the tests and/or measurements may be performed while the second node uses a custom modulation scheme and/or while the second node uses a standard modulation scheme. Thus, a performance of the second node while using the custom modulation scheme and/or while using the standard modulation scheme can be assessed by the test and/or measurement instrument.

Accordingly, the adaptive signaling method described above may be part of a test and/or measurement method performed by the test and/or measurement instrument.

In a further exemplary embodiment of the present invention, the second node comprises a test and/or measurement instrument. Accordingly, the test and/or measurement instrument may test whether the first node correctly generates the instructions for adapting the modulation scheme by analyzing the transmission signal received from the first node.

According to the present invention, the problem further is solved by a communication system. The communication system comprises a first node and a second node. The communication system is configured to perform the signaling method described above.

In fact, the communication system may be configured to perform the signaling method according to any one of the variants described above.

Regarding the advantages and further properties of the communication system, reference is made to the explanations given above with respect to the signaling method, which also hold for the communication system and vice versa.

According to the present invention, the problem further is solved by a test and/or measurement system. The test and/or measurement system comprises a test and/or measurement instrument. The test and/or measurement instrument is configured to generate a transmission signal to be transmitted to a device under test, wherein the transmission signal comprises information on a custom modulation scheme to be used by the device under test. The test and/or measurement instrument is configured to transmit the transmission signal to the device under test. The test and/or measurement instrument is configured to receive a response signal generated by the device under test based on the transmission signal, wherein the response signal is based on the custom modulation scheme. The test and/or measurement instrument is configured to analyze the response signal, thereby obtaining at least one performance parameter of the device under test.

Accordingly, the test and/or measurement instrument (corresponding to the first node) may instruct the device under test (corresponding to the second node) to adapt the modulation scheme used by the device under test in order to perform tests and/or measurements on the device under test.

For example, the tests and/or measurements may be performed while the second node, i.e. the device under test, uses a custom modulation scheme and/or while the second node uses a standard modulation scheme. Accordingly, a performance of the second node while using the custom modulation scheme and/or while using the standard modulation scheme can be assessed by the test and/or measurement instrument by analyzing the response signal.

First, the steps of the signaling method described above are performed, i.e. the test and/or measurement instrument instructs the device under test to use a custom modulation scheme, which is acknowledged by the device under test after reconfiguration.

Afterwards, a set of measurements may be performed by the test and/or measurement instrument.

The foregoing aspects and many of the attendant advantages of the claimed subject matter will become more readily appreciated as the same become better understood by reference to the following detailed description, when taken in conjunction with the accompanying drawings, wherein:
- Figure 1 schematically shows a communication system according to the present invention;
- Figure 2 schematically shows a transceiver circuit of the communication system of Figure 1;
- Figure 3 shows a flow chart of an adaptive signaling method according to the present invention;
- Figure 4 shows an exemplary custom set of constellation points;
- Figure 5 shows an exemplary adapted MAC CE;
- Figure 6 shows an exemplary adapted DCI portion;
- Figure 7 schematically shows a test and/or measurement system according to the present invention; and
- Figure 8 shows a flow chart of a test and/or measurement method according to the present invention.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

For the purposes of the present disclosure, the phrase "at least one of A, B, and C", for example, means (A), (B), (C), (A and B), (A and C), (B and C), or (A, B, and C), including all further possible permutations when more than three elements are listed. In other words, the term "at least one of A and B" generally means "A and/or B", namely "A" alone, "B" alone or "A and B".

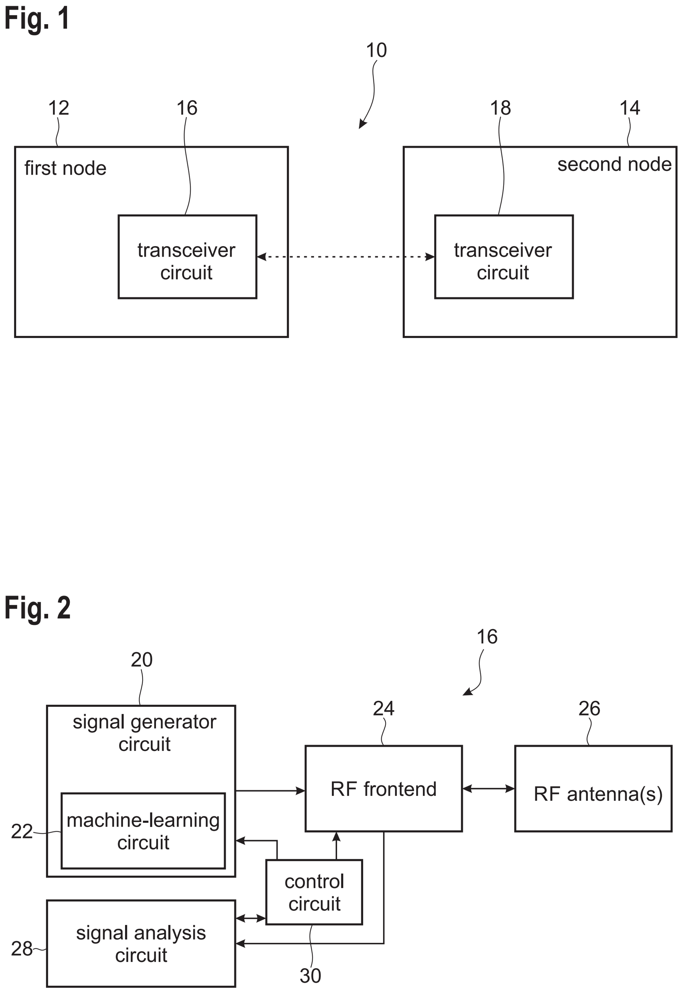

Figure 1 schematically shows a communication system 10 comprising a first node 12 and a second node 14.

In general, the first node 12 and the second node 14 are configured to communicate with each other via at least one wireless channel.

Therein, at least in a certain operational mode of the nodes 12, 14, the communication may be based on a common wireless communication standard, such as the 4G standard, the 5G standard, and/or a WLAN communication standard.

For example, the first node 12 may be or comprise a base station.

As another example, the first node 12 may be or comprise a test and/or measurement instrument, such as an oscilloscope, a vector network analyzer, a signal analyzer, a spectrum analyzer, or a mobile communication tester.

The first node 12 comprises a first transceiver circuit 16 that is configured to transmit and receive wireless radio frequency (RF) signals.

Therein and in the following, the term "circuit" is understood to describe suitable hardware, suitable software, or a combination of hardware and software that is configured to have a certain functionality.

In other words, the term "circuit" describes a module with suitable hardware, suitable software, or a combination of hardware and software that is configured to have the functionality described.

The hardware may, inter alia, comprise a CPU, a GPU, an FPGA, an ASIC, or other types of electronic circuitry.

Likewise, the second node 14 comprises a second transceiver circuit 18 that is configured to transmit and receive wireless RF signals.

Figure 2 shows the first transceiver circuit 16 in more detail.

The first transceiver circuit 16 comprises a signal generator circuit 20. In general, the signal generator circuit 20 is configured to generate a transmission signal.

The transmission signal is an RF signal that is modulated according to a predefined modulation scheme.

As will be described in more detail below, the modulation scheme applied to the RF signal may be a standard modulation scheme such as QPSK, 4-QAM, 16-QAM, 64-QAM, or 256-QAM. The standard modulation scheme may use a standard set of constellation points in the IQ plane, which may be defined in the corresponding wireless communication standard.

Alternatively, the modulation scheme applied to the RF signal may be a non-standard modulation scheme, i.e. a custom modulation scheme using a custom set of constellation points.

Optionally, the signal generator circuit 20 may comprise a machine-learning circuit 22, the functionality of which will be described in more detail below.

The first transceiver circuit 16 further comprises an RF frontend 24 that is connected with the signal generator circuit 20.

The RF frontend 24 is configured to up-convert a frequency of the transmission signal generated by the signal generator circuit 20 to a frequency intended for wireless transmission of the transmission signal.

The up-converted RF signal is forwarded to RF antenna(s) 26 of the first transceiver circuit 16 for transmission.

Moreover, the RF frontend 24 is configured to down-convert a frequency of an RF signal received by the RF antenna(s) 26 to an intermediate frequency.

The first transceiver circuit 16 further comprises a signal analysis circuit 28 that is connected to the RF frontend 24, such that the down-converted RF signal is forwarded to the signal analysis circuit 28.

The signal analysis circuit 28 is configured to demodulate the received RF signal and analyze a symbol sequence, particularly a bit sequence, comprised in the received RF signal.

The first transceiver circuit 16 may further comprise a control circuit 30 that may be connected to the signal generator circuit 20, the RF frontend 24, and/or the signal analysis circuit 28.

In general, the control circuit 30 may be configured to control the signal generator circuit 20, the RF frontend 24, and/or the signal analysis circuit 28 to adapt respective operational parameters.

It is noted that the second transceiver circuit 18 may be established analogously to the first transceiver circuit 16.

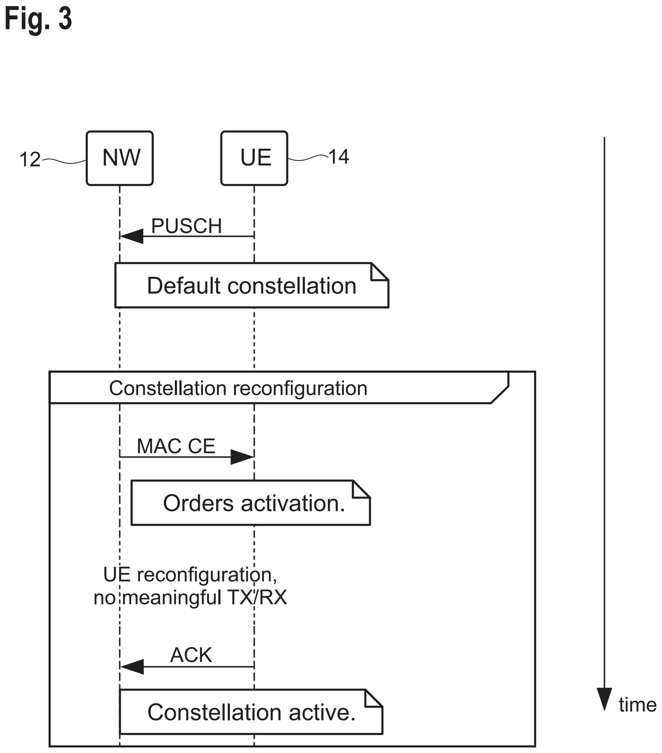

The communication system 10 is configured to perform an adaptive signaling method that is described hereinafter with reference to Figure 3.

A physical upload shared channel (PUSCH) message generated by the second node 14 may be received by the first node 12.

As is indicated in Figure 3 by "default constellation", a standard modulation scheme using a standard or rather default set of constellation points may be used by the second node 14 for generating the PUSCH message.

After receiving the PUSCH message from the second node 14, the first node initiates a constellation reconfiguration, i.e. the first node 12 reconfigures the constellation points of a modulation scheme used for communication between the first node 12 and the second node 14.

For this purpose, a transmission signal to be transmitted to the second node 14 is generated by the first node 12.

More precisely, the transmission signal is generated by the signal generator circuit 20 of the first transceiver circuit 16.

The transmission signal comprises information on a custom modulation scheme to be used for the subsequent communication between the first node 12 and the second node 14.

In general, the custom modulation scheme is a non-standard modulation scheme, i.e. the custom modulation scheme differs from standard modulation schemes defined in corresponding wireless communication standards by one or several aspects.

Particularly, the location (in the IQ plane) of at least one constellation point used for the custom modulation scheme differs from the location of a corresponding constellation point used in a standard modulation scheme.

In fact, the locations of multiple or even all constellation points used for the custom modulation scheme may differ from the locations of the corresponding constellation points used in a standard modulation scheme.

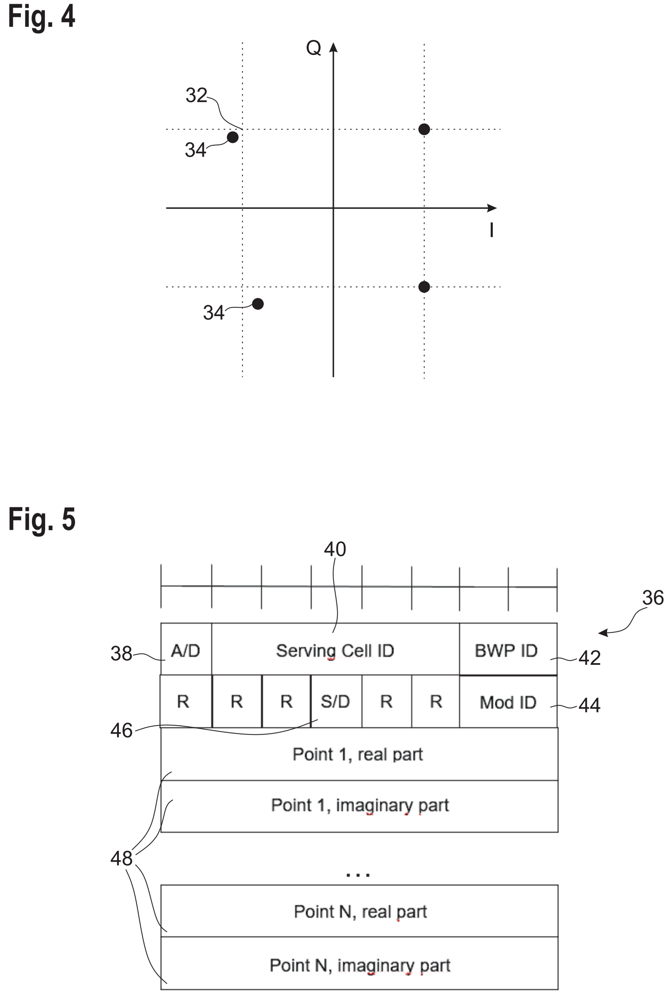

As is illustrated in Figure 4 for the exemplary case of 4-QAM, in a standard modulation scheme, the constellation points typically are arranged on junction points 32 of a rectangular grid.

In the custom modulation scheme, at least one constellation point 34 is arranged off the rectangular grid.

The first node 12 may generate the custom set of constellation points such that a predefined metric is optimized by the custom set of constellation points.

Alternatively, the first node 12 may choose the custom set of constellation points from several different custom sets of constellation points that may be saved in the memory of the first node 12, such that the predefined metric is optimized.

In general, the predefined metric relates to a transmission quality between the first node 12 and the second node 14, or rather to a reliability of the communication channel between the first node 12 and the second node 14.

By optimizing the predefined metric, at least one impairment in a signal chain including the first node 12, the second node 14, and a transmission path between the first node 12 and the second node 14 may be alleviated.

The at least one impairment may comprise at least one of a hardware impairment of the first node 12, a software impairment of the first node 12, a hardware impairment of the second node 14, a software impairment of the second node 14, a fading, a change in polarization, a change in temperature, and/or Doppler effect induced disturbances.

However, it is to be understood that any other type of impairment may be alleviated by choosing an appropriate custom modulation scheme.

Therein, the terms "hardware impairment" and "software impairment" may also comprise compatibility issues, i.e. that not all devices are capable of using every type of modulation scheme.

In fact, the custom set of constellation points may be generated or chosen by the machine-learning circuit 22, or more precisely by a machine-learning model integrated in the machine-learning circuit 22.

The machine-learning model may be pre-trained to generate and/or select the custom set of constellation points corresponding to the custom modulation scheme to be used for communication between the first node 12 and the second node 14.

For example, the machine-learning model may have been pre-trained based on a data set comprising impairment data and, optionally, corresponding constellation point data.

The impairment data may comprise a list of impairments to be alleviated, and/or RF signals affected by at least one impairment to be alleviated.

The constellation point data may comprise optimal constellation points for the particular impairment(s) in the impairment data.

Accordingly, the training data for the machine-learning model may be unlabeled training data (i.e. without the constellation point data) or labeled training data (i.e. with the constellation point data).

The first node 12, particularly the machine-learning model, may also generate a mapping between symbols and the custom constellation points of the custom modulation scheme to be used, i.e. the first node 12 may decide which symbols of a symbol sequence are mapped to which constellation points of the custom set of constellation points according to the custom modulation scheme.

According to a first variant, all information necessary for the second node 14 to use the custom modulation scheme may be provided in the transmission signal.

Thus, it is not necessary that the second node 14 has any a priori knowledge about the custom modulation scheme to be used.

As is illustrated in Figure 3 and 5, the information on the custom modulation scheme may be provided by means of an adapted MAC CE 36 in the transmission signal.

The MAC CE 36 may comprise an activation portion 38, wherein the activation portion 38 comprises at least one bit indicating whether the custom set of constellation points is to be used for communication between the first node and the second node.

For example, the activation portion 38 may comprise a single symbol, particularly a single bit. A first value of the symbol, for example 0, may indicate that the custom modulation scheme is to be deactivated, and a second value of the symbol, for example 1, may indicate that the custom modulation scheme is to be activated.

The MAC CE 36 may further comprise a serving cell ID portion 40 and a bandwidth part ID portion 42.

These portions may address the fact that different cells and bandwidth parts can have different propagation conditions and thus may need different sets of constellation points.

The MAC CE 36 may further comprise a modulation identification portion 44, wherein the modulation identification portion comprises information on the number of constellation points comprised in the custom set of constellation points.

For example, the modulation identification portion 44 may comprise a numerical value n indicating that 4ⁿ⁺¹ constellation points are comprised in the custom set of constellation points.

Therein, n is a natural number greater than or equal to zero.

The MAC CE 36 may further comprise a precision portion 46, wherein the precision portion 46 comprises information on a precision to be used for encoding the constellation points.

For example, the precision portion 46 may indicate the number of symbols or rather to the number of bits with which the locations of the custom constellation points is to be encoded.

In a particular example, the precision portion may indicate that the locations of the custom constellation points is to be encoded by one byte (i.e. 8 bits) per IQ component or by two bytes (i.e. 16 bits) per IQ component.

The MAC CE 36 may further comprise a constellation point portion 48, wherein the constellation point portion 48 comprises locations of the individual constellation points in the IQ plane.

In fact, the constellation point portion 48 may specify the real part and the imaginary part of each constellation point, particularly with the precision indicated in the precision portion 46.

The MAC CE 36 may also comprise information on a mapping between symbols, particular bits, and the custom constellation points, which mapping may be generated by the first node 12.

For example, the first constellation point included in the constellation point portion 48 may correspond to the bit sequence 0 0 (...) 0 0. The second constellation point included in the constellation point portion 48 may correspond to the bit sequence 0 0 (...) 0 1, etc.

It is noted that the transmission signal may comprise a plurality of such MAC CEs 36. Accordingly, information on a plurality of custom modulation schemes can be provided to the second node 14 simultaneously.

Moreover, it is noted that in the exemplary embodiment described above, the MAC CE 36 is used to reconfigure the uplink communication, but the MAC CE 36 can readily be adapted to control both the uplink and the downlink directions.

For example, one of the reserved fields (indicated by "R" in Figure 5) can be used to set the uplink or the downlink if the bit is 0 or 1, respectively.

According to a second variant, the second node may already have a priori knowledge about possible custom sets of constellation points.

For example, several different custom sets of constellation points may be saved in a memory of the second node 14.

In fact, several different custom sets of constellation points may be hard-coded into the second node 14.

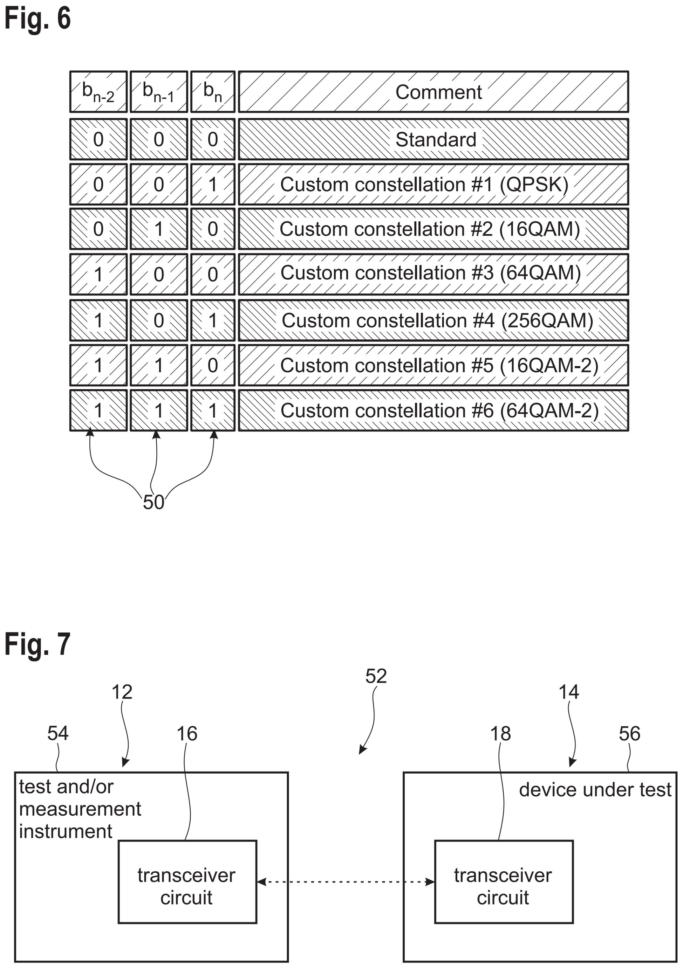

As is illustrated in Figure 6, the transmission signal may comprise an adapted DCI portion having an identification portion 50, wherein the identification portion 50 indicates the specific set of constellation points to be used by the second node 14.

Therein, different possible values of the identification portion 50 are mapped to different custom modulation schemes by a lookup table.

Optionally, at least one of the possible values of the identification portion 50 may be linked to a standard modulation scheme.

In the particular example illustrated in Figure 6, the custom modulation scheme to be used for communication between the first node 12 and the second node 14 is encoded by means of a plurality of symbols, particularly by a plurality of bits.

A first value of these symbols, for example 0 0 0, may indicate that a standard modulation scheme is to be used.

A second value of the symbols, for example 0 0 1, may indicate that a first custom modulation scheme saved in the second node 14 is to be used.

A third value of these symbols, for example 0 1 0, may indicate that a second customer relations scheme is to be used, etc.

It is noted that the two variants described above may also be combined.

Information on a plurality of different previously unknown custom modulation schemes may be provided to the second node 14 via the MAC CE 36, and the corresponding custom sets of modulation points may be saved in the second node 14.

Moreover, each custom modulation scheme may be mapped to a particular code point, i.e. to a particular value of the identification portion 50. This may be achieved by adding an additional code point portion in the MAC CE 36, for example by using one or more of the reserved portions indicated by "R" in Figure 5.

After the plurality of possible custom sets of constellation points are provided to the second node 14 via the MAC CE 36, the individual custom modulation schemes can be selectively activated by sending a transmission signal comprising a DCI portion having the corresponding identification portion 50.

After receiving the transmission signal labeled "MAC CE" in Figure 3, the second node 14 adapts the modulation scheme used to the custom modulation scheme based on the information on the custom set of constellation points comprised in the transmission signal.

After the second node 14 has reconfigured itself for using the custom modulation scheme, the second node 14 may generate and transmit an acknowledgment message ("ACK" in Figure 3) to the first node 12.

Afterwards, both the first node 12 and the second node 14 may use the custom modulation scheme for communicating with each other.

Figure 7 schematically shows a test and/or measurement system 52.

In this exemplary embodiment, the first node 12 is a test and/or measurement instrument 54.

The test and/or measurement instrument 54 comprises a transceiver circuit 16 that is established as described above with reference to Figure 2.

The second node 14 is a device under test 56. The device under test 56 may be any of the devices described above with reference to the second node 14.

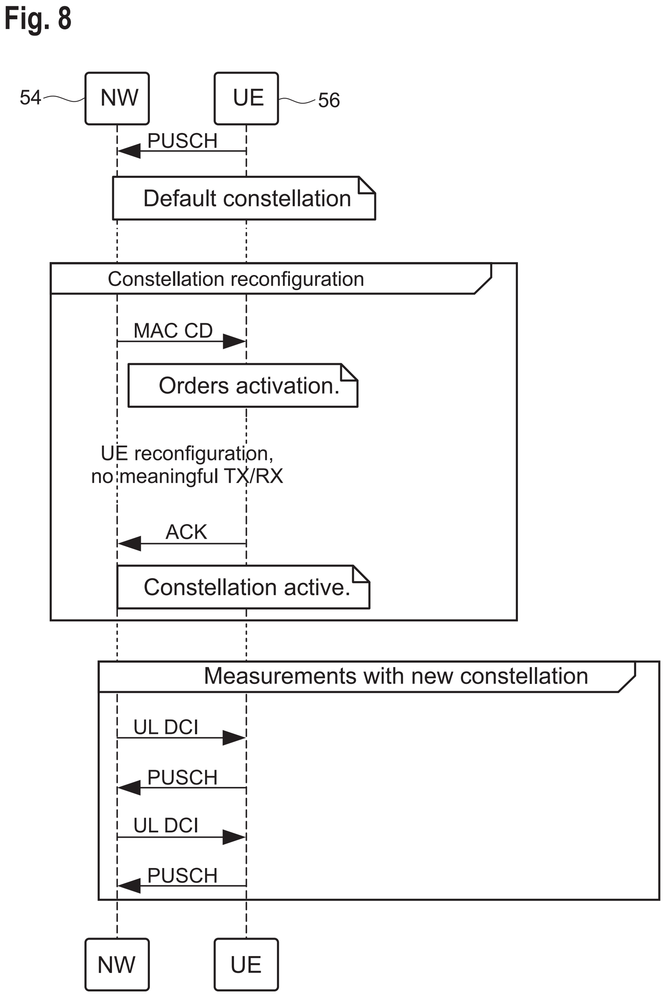

The test and/or measurement system 52 is configured to perform a test and/or measurement method that is described hereinafter with reference to Figure 8.

First, the steps of the signaling method described above are performed, i.e. the test and/or measurement instrument 54 instructs the device under test 56 to use a custom modulation scheme, which is acknowledged by the device under test 56 after reconfiguration.

Afterwards, a set of measurements may be performed by the test and/or measurement instrument 54.

Therein, several messages may be exchanged between the test and/or measurement instrument 54 an the device under test 56 ("UL DCI" and "PUSCH").

The test and/or measurement instrument 54, or more precisely the signal analysis circuit 28, may analyze response signals received from the device under test 56 that have been generated by the device under test 56 based on the custom modulation scheme.

In fact, the test and/or measurement instrument 54, or more precisely the signal analysis circuit 28, may determine at least one performance parameter of the device under test 56 based on the response signal received from the device under test 56.

In general, the at least one performance parameter is indicative of a performance of the device under test 56 while using the respective modulation scheme.

For example, the at least one performance parameter may comprise a bit error rate, a symbol error rate, a signal to noise ratio, an error vector magnitude, or any other suitable type of quantity.

It is noted that it is also conceivable that the first node 12 may be the device under test, while the second node 14 may be or comprise the test and/or measurement instrument.

In this case, the test and/or measurement instrument may test whether the device under test correctly generates the instructions for adapting the modulation scheme by analyzing the transmission signal received from the device under test.

Certain embodiments disclosed herein, particularly the respective module(s) and/or unit(s), utilize circuitry (e.g., one or more circuits) in order to implement standards, protocols, methodologies or technologies disclosed herein, operably couple two or more components, generate information, process information, analyze information, generate signals, encode/decode signals, convert signals, transmit and/or receive signals, control other devices, etc. Circuitry of any type can be used.

In an embodiment, circuitry includes, among other things, one or more computing devices such as a processor (e.g., a microprocessor), a central processing unit (CPU), a digital signal processor (DSP), an application-specific integrated circuit (ASIC), a field-programmable gate array (FPGA), a system on a chip (SoC), or the like, or any combinations thereof, and can include discrete digital or analog circuit elements or electronics, or combinations thereof. In an embodiment, circuitry includes hardware circuit implementations (e.g., implementations in analog circuitry, implementations in digital circuitry, and the like, and combinations thereof).

In an embodiment, circuitry includes combinations of circuits and computer program products having software or firmware instructions stored on one or more computer readable memories that work together to cause a device to perform one or more protocols, methodologies or technologies described herein. In an embodiment, circuitry includes circuits, such as, for example, microprocessors or portions of microprocessor, that require software, firmware, and the like for operation. In an embodiment, circuitry includes one or more processors or portions thereof and accompanying software, firmware, hardware, and the like.

The present application may reference quantities and numbers. Unless specifically stated, such quantities and numbers are not to be considered restrictive, but exemplary of the possible quantities or numbers associated with the present application. Also in this regard, the present application may use the term "plurality" to reference a quantity or number. In this regard, the term "plurality" is meant to be any number that is more than one, for example, two, three, four, five, etc. The terms "about", "approximately", "near" etc., mean plus or minus 5% of the stated value.

## Claims

1. An adaptive signaling method of signaling between a first node (12) and a second node (14), the adaptive signaling method comprising the steps of
- generating, by the first node (12), a transmission signal to be transmitted to the second node (14), wherein the transmission signal comprises information on a custom modulation scheme to be used for communication between the first node (12) and the second node (14), wherein the custom modulation scheme comprises a custom set of constellation points;
- transmitting, by the first node (12), the transmission signal to the second node (14);
- receiving, by the second node (14), the transmission signal; and
- adapting, by the second node (14), a modulation scheme used by the second node (14) for subsequent communication with the first node (12) based on the information on the custom modulation scheme comprised in the transmission signal.

2. The adaptive signaling method of claim 1, wherein at least one of the constellation points of the custom set of constellation points is offset to junction points (32) of a rectangular grid in the IQ plane.

3. The adaptive signaling method according to any one of the preceding claims, wherein the custom set of constellation points is chosen by the first node (12) to optimize a predefined metric.

4. The adaptive signaling method of claim 3, wherein the predefined metric relates to alleviating at least one impairment in a signal chain including the first node (12), the second node (14), and a transmission path between the first node (12) and the second node (14), particularly wherein the at least one impairment comprises at least one of a hardware impairment of the first node (12), a software impairment of the first node (12), a hardware impairment of the second node (14), a software impairment of the second node (14), a fading, a change in polarization, a change in temperature, and/or Doppler effect induced disturbances.

5. The adaptive signaling method according to any one of the preceding claims, wherein the first node (12) comprises a machine-learning circuit (22), wherein the machine-learning circuit (22) comprises a machine-learning model, wherein the machine-learning model is pre-trained to select the custom set of constellation points corresponding to the custom modulation scheme to be used for communication between the first node (12) and the second node (14).

6. The adaptive signaling method according to any one of the preceding claims, wherein the first node (12) generates the custom set of constellation points.

7. The adaptive signaling method according to any one of the preceding claims, wherein the first node (12) generates a custom mapping between symbols and the custom constellation points.

8. The adaptive signaling method according to any one of the preceding claims, wherein the information on the custom modulation scheme is included in a media access control, MAC, control element, CE, of the transmission signal and/or in downlink control information, DCI, of the transmission signal.

9. The adaptive signaling method according to any one of the preceding claims, wherein the transmission signal comprises a constellation point portion (48), wherein the constellation point portion (48) comprises locations of the individual constellation points in the IQ plane
and/or wherein the transmission signal comprises a modulation identification portion (44), wherein the modulation identification portion (44) comprises information on the number of constellation points comprised in the custom set of constellation points.

10. The adaptive signaling method according to any one of the preceding claims, wherein the transmission signal comprises an activation portion (38), wherein the activation portion (38) comprises at least one bit indicating whether the custom set of constellation points is to be used for communication between the first node (12) and the second node (14).

11. The adaptive signaling method according to any one of the preceding claims, wherein the transmission signal comprises a precision portion (46), wherein the precision portion (46) comprises information on a precision to be used for encoding the constellation points.

12. The adaptive signaling method according to any one of the preceding claims, wherein the custom set of constellation points is unknown to the second node (14) prior to receiving the transmission signal.

13. The adaptive signaling method according to any one of claims 1 to 11, wherein at least one custom set of constellation points is saved in a memory of the second node (14), particularly wherein the transmission signal comprises an identification portion (50), wherein the identification portion (50) indicates the set of constellation points to be used by the second node (14).

14. The adaptive signaling method of claim 1, wherein the first node (12) comprises a test and/or measurement instrument (54), and/or wherein the second node (14) comprises a test and/or measurement instrument.

15. A communication system, the communication system (10) comprising a first node (12) and a second node (14), wherein the communication system (10) is configured to perform the signaling method according to any one of the preceding claims.

16. A test and/or measurement system, the test and/or measurement system (52) comprising a test and/or measurement instrument (54),
wherein the test and/or measurement instrument (54) is configured to generate a transmission signal to be transmitted to a device under test (56), wherein the transmission signal comprises information on a custom modulation scheme to be used by the device under test (56),
wherein the test and/or measurement instrument (54) is configured to transmit the transmission signal to the device under test (56),
wherein the test and/or measurement instrument (54) is configured to receive a response signal generated by the device under test (56) based on the transmission signal, wherein the response signal is based on the custom modulation scheme, and
wherein the test and/or measurement instrument (54) is configured to analyze the response signal, thereby obtaining at least one performance parameter of the device under test (56).
